(19) Europäisches Patentamt / European Patent Office / Office européen des brevets

(11) **EP 4 386 046 A1**

(12) **EUROPEAN PATENT APPLICATION**

(43) Date of publication:
**19.06.2024 Bulletin 2024/25**

(21) Application number: **22214313.3**

(22) Date of filing: **16.12.2022**

(51) International Patent Classification (IPC):
**C08L 23/04** (2006.01)    **C08L 23/08** (2006.01)

(52) Cooperative Patent Classification (CPC):
(C-Sets available)
**C08L 23/04; C08L 23/0815;** C08L 2205/025;
C08L 2205/03; C08L 2207/062          (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventor: **WANG, Jingbo**
**4021 Linz (AT)**

(74) Representative: **Dehns**
**St. Bride's House**
**10 Salisbury Square**
**London EC4Y 8JD (GB)**

(54) **COMPOSITION**

(57) The invention provides a polymer composition comprising:
a) 99.8 to 95.0 wt%, relative to the total weight of the polymer composition, of a high density polyethylene (HDPE) with a density of 940 to 980 kg/m$^3$ measured according to ISO 1183, and an MFR$_2$ of 0.1 to 5.0 g/10min measured according to ISO 1133 at 190 °C and a load of 2.16 kg;
b) 0.05 to 0.5 wt%, relative to the total weight of the polymer composition, of at least one amide slip agent;
c) 0.1 to 1.0 wt%, relative to the total weight of the polymer composition, of a wax.

EP 4 386 046 A1

**(Cont. next page)**

(52) Cooperative Patent Classification (CPC): (Cont.)

C-Sets
**C08L 23/04, C08L 91/06, C08K 5/20;**
**C08L 23/0815, C08L 23/06, C08L 91/06,**
**C08K 5/20**

**Description**

The present invention relates to a polymer composition comprising a high density polyethylene (HDPE), an amide slip agent and a wax which is suitable for use in the manufacture of moulded articles. The invention further relates to articles comprising said polymer composition and to the use of said composition for the manufacture of an article.

**Background**

High density polyethylene (HDPE) is widely used in moulding applications due to its excellent combination of processability and mechanical properties. It is known that the performance of polyethylene is related to the density. The higher the density, the better the stiffness, however impact properties tend to decrease.

The present invention relates to a composition comprising an HDPE resin suitable for preparing injection-moulded articles, especially caps and closures. In particular, the caps and closures of the invention can be used for closing bottles, such as bottles for carbonated and still drinks.

Caps and closures are generally prepared with HDPE resins as they offer attractive mechanical properties, such as stiffness. However, it will be appreciated that compositions designed for such applications also require other properties which facilitate ease of use. In some cases, a low coefficient of friction is desired to facilitate unscrewing of the cap or closure. Normally, this is achieved via the addition of a slip agent. However, this introduces a well-known critical problem to the final article. Some of the commonly used slip agents, such as erucamide, whilst providing the desired properties, suffer from oxidation which imparts unpleasant taste and odour to the foodstuff or beverage within the container. Alternatives are thus sought.

One solution is presented in EP 1278797, which is to use saturated amides as slip agents, as these do not suffer from the oxidation problems. However, such saturated amides tend to give poorer slip effects. Moreover, typically the slip effect is time dependent and it can often take a long time for the desired low coefficient of friction to be attained.

An alternative solution is to use a permanent slip agent, which is typically a polydimethylsiloxane (PDMS) based solution, which enables the slip effect to be achieved instantly and it does not change with time. However, in order to achieve a sufficiently good slip effect, high amounts of PDMS are often required, which has several disadvantages, including negative impacts on other properties of the composition. The use of PDMS together with HDPE also makes recycling of the material more challenging.

There remains a need to provide new compositions which overcome at least some of the issues described above. The present inventors have surprisingly found that by combining the use of an amide slip agent with a wax, specifically together with an HDPE, an attractive balance of properties can be attained. In particular, the composition allows for the attainment of an attractive low coefficient of friction, which is not time dependent. Unexpectedly, the coefficient of friction may even be lowered compared to the use of the wax alone. Furthermore, the compositions are suitable for use directly in forming the injection moulded article, such as the cap or closure.

**Summary of Invention**

Viewed from one aspect the invention provides a polymer composition comprising:

a) 99.8 to 95.0 wt%, based on the total weight of the polymer composition, of a high density polyethylene (HDPE) with a density of 940 to 980 kg/m$^3$ measured according to ISO 1183, and an MFR$_2$ of 0.1 to 5.0 g/10min measured according to ISO 1133 at 190 °C and a load of 2.16 kg;
b) 0.05 to 0.5 wt%, based on the total weight of the polymer composition, of at least one amide slip agent;
c) 0.1 to 1.0 wt%, based on the total weight of the polymer composition, of a wax. Viewed from another aspect the invention provides an article comprising a polymer composition as hereinbefore defined.

Viewed from a further aspect, the invention provides the use of the polymer composition as hereinbefore defined in the manufacture of an article, preferably an injection or compression moulded article, such as a cap or closure.

**Detailed Description of Invention**

**High Density Polyethylene (HDPE)**

The polymer of the invention is a high density ethylene polymer (HDPE). The HDPE may be a homopolymer or a copolymer, but is preferably an ethylene copolymer. By ethylene copolymer is meant a polymer the majority by weight of which derives from ethylene monomer units (i.e. at least 50 wt% ethylene relative to the total weight of the copolymer). The comonomer contribution preferably is up to 10 % by mol, more preferably up to 5 % by mol. Ideally however there are very low levels of comonomer present in the polymers of the present invention such as 0.1 to 2.0 mol%, e.g. 0.1 to 1.0 mol%.

The other copolymerisable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene, and 4-methyl-pent-1-ene. The use of 1-hexene, 1-octene and 1-butene, or mixtures thereof, is particularly preferred, especially 1-hexene and 1-butene. Ideally there is only one comonomer present.

The polymer of the invention may be unimodal or multimodal.

The polymer of the invention is preferably multimodal, i.e, comprising at least two fractions. The polymer is most preferably bimodal.

Usually, a polyethylene composition comprising at least two polyethylene fractions, which have been produced under different polymerisation conditions resulting in different (weight average) molecular weights and molecular weight distributions for the fractions, is referred to as "multimodal". Accordingly, in this sense the HDPE polymers of the invention are preferably multimodal polyethylenes. The prefix "multi" relates to the number of different polymer fractions the composition is consisting of. The polyethylene may also be multimodal with respect to comonomer content.

The form of the molecular weight distribution curve, i.e. the appearance of the graph of the polymer weight fraction as a function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The HDPE of the invention has an $MFR_2$ of 0.1 to 5.0 g/10 min measured according to ISO 1133 at 190 °C and a load of 2.16 kg. Preferable ranges for $MFR_2$ are 0.3 to 3.0 g/10 min, more preferably 0.4 to 2.5 g/lOmin, such as 0.5 to 2.0 g/10min.

The HDPE of the invention preferably has an $MFR_{21}$ of 15 to 80 g/10min measured according to ISO 1133 at 190 °C and a load of 21.6 kg, such as 20 to 75 g/10 min, most preferably 30 to 65 g/10 min.

The HDPE of the invention preferably has a Flow Rate Ratio (FRR) of the $MFR_{21}/MFR_2$ of at least 25.0, like at least 35.0, more preferably at least 45.0. Furthermore, the HDPE of the invention preferably has a Flow Rate Ratio (FRR) of the $MFR_{21}/MFR_2$ of up to 80.0, like up to 75.0, more preferably up to 70.0.

The density of the polymer is in the range 940 to 980 $kg/m^3$ determined according to ISO 1183. The polymers of the invention are therefore high density polyethylenes, HDPEs. Preferably, the polymer has a density of 950 to 970 $kg/m^3$, more preferably 951 to 965 $kg/m^3$, even more preferably 952 to 963 $kg/m^3$, such as 953 to 961 $kg/m^3$.

The HDPE of the invention preferably has a molecular weight distribution (MWD) in the range 7 to 30, more preferably 9 to 25, such as 10 to 20.

The HDPE of the invention typically comprises at least a lower molecular weight component (A) and a higher molecular weight component (B). The terms "higher" and "lower" in this context will be understood to be relative terms with respect to each other. Thus, component (A) has a lower molecular weight that component (B) and component (B) has a higher molecular weight than component (A).

In one particularly preferable embodiment, the HDPE consists of components (A) and (B). The weight ratio of fraction (A) to fraction (B) in the composition is ideally in the range of 30:70 to 70:30, more preferably 35:65 to 65:35, most preferably 40:60 to 60:40. In some embodiments the ratio may be 35 to 55 wt% of fraction (A) and 45 to 65 wt% of fraction (B), such as 45 to 52 wt% of fraction (A) and 48 to 55 wt% of fraction (B), wherein the wt% values are relative to the total weight of the multimodal HDPE.

In a particularly preferred embodiment, the wt% values for fractions (A) and (B) add up to 100 %.

Each of Fraction (A) and Fraction (B) may be an ethylene homopolymer or an ethylene copolymer. By ethylene homopolymer is meant a polymer comprising at least 97 mol% (such as at least 98 mol%, especially at least 99.5 mol%) ethylene monomer units. The term "ethylene copolymer" is defined above. Most preferably, fraction (A) is an ethylene homopolymer and fraction (B) is an ethylene copolymer.

The HDPE of the invention is typically produced in a multistage process wherein fractions (A) and (B) are produced in subsequent stages. In such a case, the properties of the fractions produced in the second step (or further steps) of the multistage process can either be inferred from polymers which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

HDPEs produced in a multistage process are also designated as *"in-situ"* blends. The resulting end product consists of an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture

The lower molecular weight fraction (A) typically has an $MFR_2$ of 100 to 2000 g/lOmin, preferably of 125 to 1500 g/lOmin, more preferably 150 to 1000 g/lOmin, such as 200 to 750 g/10 min.

Fraction (A) may have a density of 955 to 980 $kg/m^3$, preferably 960 to 978 $kg/m^3$, such as 965 to 975 $kg/m^3$.

Fraction (A) can be an ethylene homopolymer or copolymer. Preferably, Fraction (A) is an ethylene homopolymer.

The higher molecular weight fraction (B) typically has an $MFR_2$ of 0.0001 to 1.0 g/lOmin, preferably of 0.0005 to 0.5 g/lOmin, more preferably 0.0008 to 0.1 g/lOmin, such as 0.001 to 0.05 g/10 min.

Fraction (B) may have a density of 925 to 970 $kg/m^3$, preferably 930 to 960 $kg/m^3$, such as 935 to 950 $kg/m^3$.

Fraction (B) can be an ethylene homopolymer or copolymer. Fraction (B) is preferably a copolymer. Preferred ethylene copolymers employ alpha-olefins (e.g. C3-12 alpha-olefins) as comonomers. Examples of suitable alpha-olefins include 1-butene, 1-hexene and 1-octene. 1-Butene is an especially preferred comonomer.

**Preparation of HDPE**

The HDPE may be produced by any suitable polymerisation method known in the art. In those embodiments wherein the HDPE is a multimodal HDPE, it may be produced by polymerisation using conditions which create a multimodal (e.g. bimodal) polymer product ideally using a Ziegler Natta catalyst system. Typically, a two or more stage, i.e. multistage, polymerisation process is used with different process conditions in the different stages or zones (e.g. different temperatures, pressures, polymerisation media, hydrogen partial pressures, etc). Preferably, the multimodal (e.g. bimodal) composition is produced by a multistage polymerisation, e.g. using a series of reactors, with optional comonomer addition preferably in only the reactor(s) used for production of the higher/highest molecular weight component(s). A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662).

Preferably, the HDPE is a bimodal HDPE prepared in a two-stage polymerisation process.

The first polymerisation stage produces an ethylene homopolymer or an ethylene copolymer, typically an ethylene homopolymer, which is subsequently fed to the second polymerisation stage. The second polymerisation stage can produce a further ethylene homopolymer, or an ethylene copolymer, preferably an ethylene copolymer.

The first polymerisation stage is preferably a slurry polymerisation step.

The slurry polymerisation usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amounts of methane, ethane and/or butane.

The ethylene content in the fluid phase of the slurry may be from 1 to 50 % by mole, preferably from 2 to 20 % by mole and in particular from 2 to 10 % by mole. The benefit of having a high ethylene concentration is that the productivity of the catalyst is increased but the drawback is that more ethylene needs to be recycled than if the concentration was lower.

The temperature in the first polymerisation stage is typically from 60 to 100 °C, preferably from 65 to 95 °C, more preferably from 70 to 95 °C. An excessively high temperature should be avoided to prevent partial dissolution of the polymer into the diluent and the fouling of the reactor. The pressure is generally from 1 to 150 bar, preferably from 40 to 80 bar.

The slurry polymerisation may be conducted in any known reactor used for slurry polymerisation. Such reactors include a continuous stirred tank reactor and a loop reactor. It is especially preferred to conduct the slurry polymerisation in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerisation stage as a slurry polymerisation in a loop reactor.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerisation stage continuously.

Hydrogen is typically introduced into the first polymerisation stage for controlling the $MFR_2$ of the resultant polymer. The amount of hydrogen needed to reach the desired MFR depends on the catalyst used and the polymerisation conditions. The desired polymer properties may be obtained in slurry polymerisation in a loop reactor with the molar ratio of hydrogen to ethylene of from 100 to 1000 mol/kmol (or mol/1000 mol) and preferably of from 200 to 800 mol/kmol.

The average residence time in the first polymerisation stage is typically from 20 to 120 minutes, preferably from 30 to 80 minutes. As it is well known in the art the average residence time $\tau$ can be calculated from Equation 1 below:

## Equation 1: Residence Time

Where $V_R$ is the volume of the reaction space (in case of a loop reactor, the volume of the reactor, in case of the fluidized bed reactor, the volume of the fluidized bed) and $Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the ethylene feed rate.

In the second polymerisation stage, ethylene is polymerised, optionally together with at least one alpha-olefin comonomer, in the presence of the catalyst and the ethylene polymer produced in the first polymerisation stage. It will thus be appreciated that the second polymerisation stage generates an ethylene polymer, which combines with the ethylene polymer from the first polymerisation stage, to form the multimodal HDPE of the invention. Preferable comonomers are discussed hereinbefore, however it is noted that it is particularly preferable if the at least one alpha-olefin is 1-butene.

The second polymerisation stage is preferably a gas phase polymerisation step, i.e. carried out in a gas-phase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

A chain transfer agent (e.g. hydrogen) is typically added to the second polymerisation stage, preferably in amounts of 50 to 500 mol of $H_2$/kmol ethylene.

The split between the first polymerisation stage and the second polymerisation stage (i.e. between the slurry polymerisation and the gas phase polymerisation) is typically 30:70 to 70:30, more preferably 35:65 to 65:35, most preferably 40:60 to 60:40.

Prepolymerisation

The polymerisation steps discussed above may be preceded by a prepolymerisation step. The purpose of the prepolymerisation is to polymerise a small amount of polymer onto the catalyst at a low temperature and/or a low monomer concentration. By prepolymerisation it is possible to improve the performance of the catalyst in slurry and/or modify the properties of the final polymer. The prepolymerisation step is conducted in slurry.

Thus, the prepolymerisation step may be conducted in a loop reactor. The prepolymerisation is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerisation step is typically from 0 to 90 °C, preferably from 20 to 80 °C and more preferably from 55 to 75 °C.

The pressure is not critical and is typically from 1 to 150 bar, preferably from 40 to 80 bar.

The amount of monomer is typically such that from 0.1 to 1000 grams of monomer per one gram of solid catalyst component is polymerised in the prepolymerisation step. As the person skilled in the art knows, the catalyst particles recovered from a continuous prepolymerisation reactor do not all contain the same amount of prepolymer. Instead, each particle has its own characteristic amount which depends on the residence time of that particle in the prepolymerisation reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerisation step when a prepolymerisation step is present. However, where the solid catalyst component and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is understood within the scope of the invention, that the amount of polymer produced in the prepolymerisation typically lies within 1 - 5 wt% in respect to the final HDPE.

Catalyst

The polymerisation is typically conducted in the presence of a Ziegler-Natta polymerisation catalyst. Suitable Ziegler-Natta (ZN) catalysts generally comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support.

Particularly preferred Ziegler-Natta catalysts are such as described in EP 1378528 A1 and EP 2994506.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. An especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound for example an aluminium compound on a magnesium dihalide, like magnesium dichloride. Such catalysts are disclosed, for instance, in WO 2005/118655, EP 810235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically, triethylaluminium is used in such amount that the molar ratio of aluminium to the transition metal, like Al/Ti, is from 1 to 1000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, 2,2-di-(2-furan)-propane, or isomers or mixtures thereof. Internal organic compounds are also often called as internal electron donors.

In the production of the HDPE of the present invention, preferably a compounding step is applied, wherein the composition of the base resin, i.e. the blend, which is typically obtained as a base resin powder from the reactor, is extruded in an extruder and then pelletised to polymer pellets in a manner known in the art.

The HDPE may also contain minor quantities of additives such as pigments, nucleating agents, antistatic agents, fillers, antioxidants, etc., generally in amounts of up to 10 % by weight, preferably up to 5 % by weight.

Optionally, additives or other polymer components can be added to the HDPE during the compounding step in the amount as described above. Preferably, the HDPE of the invention obtained from the reactor is compounded in the extruder together with additives in a manner known in the art.

## Composition

The invention relates to a composition comprising the HDPE as defined above, together with at least one amide slip agent and a wax.

The polymer composition comprises 95.0 to 99.8 wt% of the HDPE, relative to the total weight of the polymer composition. Preferably, the HDPE is present in an amount of 96.0 to 99.75 wt%, more preferably 98.0 to 99.75 wt%, relative to the total weight of the polymer composition.

The at least one amide slip agent is present in an amount of 0.05 to 0.5 wt%, relative to the total weight of the polymer composition. It is preferred if the at least one amide slip agent is present in an amount of 0.08 to 0.4 wt%, more preferably 0.1 to 0.3 wt%, relative to the total weight of the polymer composition.

The wax is present in an amount of 0. 1 to 1.0 wt%, relative to the total weight of the polymer composition. It is preferred if the wax is present in an amount of 0. 12 to 0.8 wt%, more preferably 0.15 to 0.5 wt%, relative to the total weight of the polymer composition.

Whilst it is within the ambit of the invention for polymers other than the HDPE to be present in the polymer composition, it is preferable if the HDPE is the only polymer component present.

The polymer composition preferably consists of the HDPE, the at least one amide slip agent and the wax. For the avoidance of doubt, it is envisaged that usual polymer additives, e.g. pigments, nucleating agents, antistatic agents, fillers and antioxidants, may be present even when the polymer composition "consists" of the HDPE, the at least one amide slip agent and the wax. The term "consists of" is not intended therefore to exclude the presence of polymer additives. It does however exclude the presence of other polymer components for blending with the HDPE, the at least one amide slip agent and the wax. If a carrier polymer is used as part of a masterbatch, that is not excluded however. The composition may be free of any other mixing polymers but may still comprise minor amounts of carrier polymer used for masterbatches.

The polymer composition is typically prepared by blending and homogeneously mixing the components (e.g. the HDPE, the at least one amide slip agent and the wax), for example by melt mixing in an extruder.

The polymer composition of the present invention may be characterised by a constant or stable coefficient of friction (COF). In particular, the composition may have a coefficient of friction when measured according to ISO 8295 on injection moulded specimens prepared according to ISO 17855-2 after 1 day of at most 0.35 or below, preferably of 0.30 or below. Alternatively, or in addition, the composition may have a coefficient of friction when measured according to ISO 8295 on injection moulded specimens prepared according to ISO 17855-2 after 14 days of at most 0.35 or below, preferably of 0.30 or below. Alternatively, or in addition, the composition may have a coefficient of friction when measured according to ISO 8295 on injection moulded specimens prepared according to ISO 17855-2 after 37 days of at most 0.35 or below, preferably of 0.30 or below.

## Amide Slip Agent

The at least one amide slip agent may be any suitable amide slip agent known in the art. The term "slip agent" is known to the skilled person and thus it will be understood that the amide slip agent may be any slip agent comprising at least one amide group. Slip aids are used to reduce the force required to remove the closure from a bottle or package.

In a preferable embodiment, the amide slip agent is a fatty acid amide derivative. The fatty acid amide derivative may be an unsaturated or saturated fatty acid amide derivative, preferably a saturated fatty acid amide derivative.

Thus, in one embodiment, the amide slip agent is an unsaturated fatty acid amide, preferably a mono-unsaturated, i.e. containing only one ethylene group fatty acid amide derivative.

Accordingly, in one embodiment the unsaturated fatty acid amide may be one of formula:

$$CH_3(CH_2)_x CH=CH(CH_2)_y CONH_2$$

with x and y being independent from each other positive integers.

In one particularly preferred embodiment the x is a positive integer between 4 and 10 and/or y is a positive integer between 8 and 14, preferably x = 7 and y = 11. Thus it is especially preferred that the unsaturated fatty acid amide is:

$$CH_3(CH_2)_7CH=CH(CH_2)_{11}CONH_2,$$

i.e. erucamide.

Alternatively, the amide slip agent may be a saturated fatty acid amide. The saturated fatty acid amide may comprise 8 to 30 carbon atoms. The saturated fatty acid amides are preferably linear fatty acid amides represented by the formula $CH_3(CH_2)nCONH_2$ in which n is 6 to 28. Linear saturated fatty acid amides containing at least 12 carbon atoms and mixtures thereof are particularly preferred. Most preferably, the saturated fatty acid amide is selected from the group consisting of behenamide, arachidamide, stearamide, palmitamide, myristamide and lauramide.

It is within the ambit of the invention for the composition to comprise a single amide slip agent or a mixture of two or more different amide slip agents. In this context, where there is a mixture present, this mixture may contain only saturated fatty acid amides, only unsaturated fatty acid amides, or both saturated and unsaturated fatty acid amides. It is most preferable for a single amide slip agent to be employed.

### Wax

The wax may be any suitable wax. In this context, it will be understood that by "wax" we mean organic compounds which are lipophilic, malleable solids near ambient temperatures. They include higher alkanes and lipids, typically with melting points above about 40 °C (104 °F), to give low viscosity liquids. Waxes are insoluble in water but soluble in organic, nonpolar solvents.

It is particularly preferred if the wax is a natural wax. It will be understood that by "natural wax" we mean a wax which is produced by plants or animals or is present in petroleum. The definition of "natural wax" for purposes of this invention is defined as a wax or mixture of waxes of natural origin which can be either vegetable, animal or mineral, or which can be a chemically modified derivative thereof, or at least one wax of natural origin in combination with other types of wax or ingredients. The natural wax of the invention may be of vegetable, animal, or mineral origin.

In an even further preferred embodiment, the natural wax is a modified natural wax, especially a polar modified natural wax. Modified waxes are natural waxes that have been treated chemically to change their nature and properties. Thus, a polar modified natural wax is one which has been modified to include one or more polar functional groups. Examples of such functional groups include hydroxyl, carboxyl, amino and phosphate.

The wax may have a viscosity in the range 10 to 100 mPas$^{-1}$, preferably 20 to 80 mPas$^{-1}$, when measured in accordance with DIN 53019 at 100 °C.

Preferably, the wax has a drop point of 70 to 110 °C, more preferably 75 to 105 °C, when measured in accordance with ISO 2176.

The wax may have an acid value of 5 to 65 mg KOH/g, such as 6 to 55 mg KOH/g, when measured in accordance with ISO 2114.

Ideally, the wax has a saponification value of 50 to 150 mg KOH/g, such as 60 to 130 mg KOH/g, when measured in accordance with ISO 3681.

Suitable waxes are available commercially, for example under the trade name Licocare from Clariant.

### Articles

Still further, the present invention relates to an article comprising the composition as described above. The invention also relates to the use of such a composition in the manufacture of an article.

In one embodiment, the article comprises at least 90.0 wt%, relative to the total weight of the article, of the composition of the invention, more preferably at least 95.0 wt%, still more preferably at least 98.0 wt%, like at least 99.9 wt%. It is especially preferred that the article consists of the composition.

Articles according to the present invention may be injection or compression moulded articles, preferably injection moulded articles, more preferably a cap or closure. Such articles may be prepared by conventional methods as known in the art.

It will be appreciated that any parameter mentioned above is measured according to the detailed test given below. In any parameter where a narrower and broader embodiment are disclosed, those embodiments are disclosed in connection with the narrower and broader embodiments of other parameters.

The invention will now be described with reference to the following nonlimiting examples.

**Test Methods:**

**Melt Flow Rate (MFR)**

The melt flow rates were measured at 190 °C with a load of 2.16 kg ($MFR_2$) or 21.6 kg ($MFR_{21}$) according to ISO 1133

*Calculation of $MFR_2$ of Fraction (A) and (B)*

$$logA = x \cdot logB + (1 - x) \cdot logC$$

$$C = 10^{\wedge} \frac{(logA - x.logB)}{(1-x)}$$

B = $MFR_2$ of Fraction (A)
C = $MFR_2$ of Fraction (B)
A = final $MFR_2$ (mixture) of multimodal HDPE
X = weight fraction of Fraction (A)

**Flow Rate Ratio (FRR21/2))**

FRR was determined as the ratio between the $MFR_{21}$ and the $MFR_2$.

**GPC**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x M_i)}{\sum_{i=1}^{N} A_i} \quad (2)$$

$$M_z = \frac{\sum_{i=1}^{N} (A_i x M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IRS from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \ \alpha_{PS} = 0.655$$

$$K_{PE} = 39 \times 10^{-3} \text{ mL/g}, \ \alpha_{PE} = 0.725$$

$$K_{PP} = 19 \times 10^{-3} \text{ mL/g}, \ \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

**Density**

The density was measured according to ISO 1183 and ISO1872-2 for sample preparation.

**Coefficient of Friction (CoF)**

The CoF was measured on $150 \times 80 \times 1mm^3$ thick injection moulded specimen based on ISO 8295. The injection moulding was done according to ISO 17855-2. The CoF test was performed on a Zwick Z1.0 S machine. The following conditions were used:

Test speed: 100 mm/min $\pm$ 10 mm/min
Measuring distance: 56 mm
Loading weight: 200 g $\pm$ 2 g

Before the measurements the specimen was stored at 23°C, RH 50% for desired time, e.g. 1 day, 3 days, 7 days, etc.

**Experimental**

Materials:

**Polysiloxane MB:** MULTIBASE™ MB25-235 Masterbatch is commercially available from Multibase (Masterbatch containing 25% polysiloxane by weight)

**Slip Agent:** Finawax S, a stearamide commercially available from Fine Organics.

**Wax:** Licocare® RBW 102 powder VITA is a polar modified wax based on renewable resource, commercially available from Clariant. It has a viscosity of 20 mPa.s measured according to DIN53019 at 100 °C.

**HDPE:** a bimodal HDPE produced with a ZN catalyst (as disclosed in EP 2994506) in a pilot plant, with a configuration of prepolymerisation- loop - gas phase reactor, having MFR 0.8 g/10min, density 955.5 kg/m$^3$.

Table 1 shows the typical polymerisation parameters and final polymer properties for the HDPE.

**Table 1**

|  | HDPE |
|---|---|
| **Prepoly** |  |
| Temp. (°C) | 70 |
| Press. (kPa) | 5700 |

(continued)

|  | HDPE |
|---|---|
| **Prepoly** | |
| H2 (g/h) | 5.0 |
| Loop **reactor** | |
| Temp. (°C) | 95 |
| Press. (kPa) | 5500 |
| C2 conc. (mol-%) | 3.5 |
| H2/C2 (mol/kmol) | 430.0 |
| Density | 970.0 |
| split % | 49.0 |
| MFR2 (g/10 min) | 350.00 |
| **GPR** | |
| Temp. (°C) | 85 |
| Press. (kPa) | 2000 |
| H2/C2 (mol/kmol) | 110 |
| C4/C2 (mol/kmol) | 25.0 |
| split % | 51.0 |
| Density (kg/m$^3$) | 955.5 |
| MFR2 (g/10 min) | 0.80 |
| MFR in GPR | 0.002 |
| Density in GPR | 941.6 |
| **Pellet** | |
| Density (kg/m$^3$) | 955.5 |
| MFR2 (g/10 min) | 0.8 |
| MFR21 (g/10 min) | 47.35 |
| MFR21/MFR2 | 59.2 |
| MWD | 12-14 |

**Formation of Compositions and Test Specimens**

The desired amounts of HDPE powder and additives were premixed in an intensive mixer and then compounded on a ZSK 57 twin screw extruder. The melt temperature was 210°C, production rate was 200kg/h. The following additives were added: 0.05 wt% Irganox 1010 (BASF), 0.2 wt% Irgafos 168 (BASF) & 0.05 wt% CEASIT FI, where wt% are relative to total weight of composition (the sum of HDPE powder + additive = 100%).

Three compositions were prepared as shown in Table 2 via blending. The blending was done on a ZSK 18 twin screw extruder, with melt temperature of 210°C, output rate 7kg/h. The coefficient of friction was measured on 150 x 80 x 1 mm$^3$ injection moulded specimens at a series of time periods and results are shown in Table 2.

As can be seen, the inventive example shows improved (lower) CoF values which are consistent with time, when compared with CE2. The combination of slip agent and wax in IE1 leads to a constant CoF (an advantage in terms of short storage time for production efficiency) which is advantageously low. IE1 offers the advantage over CE1 in this it is far better suited for recycling. The presence of two different materials, PE and polysiloxane, in CE1 would make the recycling of such a composition challenging.

**Table 2: Compositions and Properties of Moulded Articles.**

|  | CE1 | IE1 | CE2 |
|---|---|---|---|
| HDPE (wt%) | 97 | 99.75 | 99.75 |
| Slip Agent (wt%) |  | 0.1 |  |
| Wax (wt%) |  | 0.15 | 0.25 |
| Polysiloxane MB (wt%)* | 3 |  |  |
| $MFR_2$ of blend (g/10 min) | 0.76 | 0.9 | 0.79 |
|  |  |  |  |
| **Coefficient of Friction** |  |  |  |
| 1 day | 0.18 | 0.29 | 0.4 |
| 3 days | 0.2 | 0.26 | 0.42 |
| 7 days | 0.23 | 0.25 | 0.39 |
| 14 days | 0.2 | 0.21 | 0.44 |
| 37 days | 0.22 | 0.20 | 0.40 |
| *added as masterbatch |  |  |  |

**Claims**

1. A polymer composition comprising:

   a) 99.8 to 95.0 wt%, relative to the total weight of the polymer composition, of a high density polyethylene (HDPE) with a density of 940 to 980 $kg/m^3$ measured according to ISO 1183, and an $MFR_2$ of 0.1 to 5.0 g/10min measured according to ISO 1133 at 190 °C and a load of 2.16 kg;
   b) 0.05 to 0.5 wt%, relative to the total weight of the polymer composition, of at least one amide slip agent;
   c) 0.1 to 1.0 wt%, relative to the total weight of the polymer composition, of a wax.

2. The polymer composition as claimed in claim 1, wherein the HDPE has an $MFR_2$ of 0.3 to 3.0 g/10 min measured according to ISO 1133 at 190 °C and a load of 2.16 kg, preferably 0.4 to 2.5 g/10min, more preferably 0.5 to 2.0 g/10min.

3. The polymer composition as claimed in claim 1 or 2, wherein the HDPE has a density of 950 to 970 $kg/m^3$ measured according to ISO 1183, preferably 951 to 965 $kg/m^3$, more preferably 952 to 963 $kg/m^3$, even more preferably 953 to 961 $kg/m^3$.

4. The polymer composition as claimed in any of claims 1 to 3, wherein the HDPE is a multimodal polyethylene polymer comprising a lower molecular weight (LMW) component (A) and a higher molecular weight (HMW) component (B).

5. The polymer composition as claimed in claim 4, wherein the HDPE comprises a lower molecular weight (LMW) homopolymer component (A) and a higher molecular weight (HMW) ethylene copolymer component (B), preferably wherein said HMW copolymer component (B) comprises at least one C3-12 alpha olefin, preferably 1-butene, 1-hexene and 1-octene, more preferably 1-butene.

6. The polymer composition as claimed in claim 4 or 5, wherein said HDPE comprises 48 to 55 wt% of the HMW component (B) and 52 to 45 wt% of the LMW component (A).

7. The polymer composition as claimed in any of claims 1 to 6, wherein said amide slip agent is a saturated or unsaturated fatty acid amide.

8. The polymer composition as claimed in claim 7, wherein the amide slip agent is a saturated fatty acid amide, preferably selected from the group consisting of behenamide, arachidamide, stearamide, palmitamide, myristamide and lauramide.

9. The polymer composition as claimed in any of claims 1 to 8, wherein the wax is a natural wax, preferably a polar modified natural wax.

10. The polymer composition as claimed in any of claims 1 to 9, wherein said wax has a viscosity in the range 10 to 100 mPas$^{-1}$ when measured in accordance with DIN 53019 at 100 °C.

11. The polymer composition as claimed in any of claims 1 to 10, wherein said composition comprises 0.08 to 0.4 wt% of the amide slip agent, relative to the total weight of the composition as a whole, preferably 0.1 to 0.3 wt%.

12. The polymer composition as claimed in any of claims 1 to 11, wherein said composition comprises 0.12 to 0.8 wt% of the wax, more preferably 0.15 to 0.5 wt%, relative to the total weight of the polymer composition as a whole.

13. An article comprising a polymer composition as claimed in any of claims 1 to 12.

14. The article as claimed in claim 13, wherein said article is an injection or compression moulded article, preferably an injection moulded article, such as a cap or closure.

15. Use of the polymer composition as claimed in any one of claims 1 to 12 in the manufacture of an article, preferably an injection or compression moulded article, such as a cap or closure.

Europäisches
Patentamt

European
Patent Office

Office européen
des brevets

# EUROPEAN SEARCH REPORT

Application Number

EP 22 21 4313

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 1 278 797 A1 (SOLVAY [BE]) 29 January 2003 (2003-01-29) | 1-15 | INV. C08L23/04 C08L23/08 |
| Y | * claims 1-12 * * paragraphs [0001] - [0003], [0008] - [0010], [0024] - [0028] * ----- | 1-15 | |
| Y | EP 2 939 814 A1 (SCG CHEMICALS CO LTD [TH]) 4 November 2015 (2015-11-04) * claims 1-6,14,15 * * paragraph [0012] * * page 5 - page 6; examples; tables 1,2 * ----- | 1-15 | |
| Y | EP 2 402 391 A1 (BOREALIS AG [AT]) 4 January 2012 (2012-01-04) * claims 1-4,12 * * paragraphs [0001], [0002], [0006], [0011] - [0013] * ----- | 1-15 | |

TECHNICAL FIELDS
SEARCHED (IPC)

C08L

The present search report has been drawn up for all claims

| Place of search | Date of completion of the search | Examiner |
|---|---|---|
| Munich | 14 April 2023 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 386 046 A1

### ANNEX TO THE EUROPEAN SEARCH REPORT
### ON EUROPEAN PATENT APPLICATION NO.

EP 22 21 4313

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2023

| Patent document cited in search report | | Publication date | Patent family member(s) | | Publication date |
|---|---|---|---|---|---|
| EP 1278797 | A1 | 29-01-2003 | AT | 285437 T | 15-01-2005 |
| | | | AU | 780688 B2 | 14-04-2005 |
| | | | BG | 65921 B1 | 31-05-2010 |
| | | | CA | 2404135 A1 | 27-09-2001 |
| | | | CN | 1418239 A | 14-05-2003 |
| | | | CZ | 20023171 A3 | 12-02-2003 |
| | | | DE | 60107946 T2 | 29-12-2005 |
| | | | DK | 1278797 T3 | 04-04-2005 |
| | | | EP | 1136524 A1 | 26-09-2001 |
| | | | EP | 1278797 A1 | 29-01-2003 |
| | | | ES | 2234824 T3 | 01-07-2005 |
| | | | HU | 0300568 A2 | 28-07-2003 |
| | | | JP | 4726380 B2 | 20-07-2011 |
| | | | JP | 2003528193 A | 24-09-2003 |
| | | | KR | 20020081487 A | 26-10-2002 |
| | | | MX | PA02009289 A | 10-06-2003 |
| | | | NO | 336681 B1 | 19-10-2015 |
| | | | PL | 358339 A1 | 09-08-2004 |
| | | | PT | 1278797 E | 31-03-2005 |
| | | | SK | 13552002 A3 | 01-04-2003 |
| | | | US | 2003105198 A1 | 05-06-2003 |
| | | | WO | 0170872 A1 | 27-09-2001 |
| EP 2939814 | A1 | 04-11-2015 | EP | 2939814 A1 | 04-11-2015 |
| | | | WO | 2015165768 A1 | 05-11-2015 |
| EP 2402391 | A1 | 04-01-2012 | AU | 2011273582 A1 | 20-12-2012 |
| | | | CN | 102958995 A | 06-03-2013 |
| | | | EP | 2402391 A1 | 04-01-2012 |
| | | | ES | 2430856 T3 | 22-11-2013 |
| | | | KR | 20130029408 A | 22-03-2013 |
| | | | RU | 2012155043 A | 10-08-2014 |
| | | | US | 2013237652 A1 | 12-09-2013 |
| | | | WO | 2012000958 A1 | 05-01-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1278797 A
- WO 9744371 A
- WO 9618662 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A

- EP 1591460 A
- WO 2007025640 A
- WO 9619503 A
- WO 9632420 A
- EP 1378528 A1
- EP 2994506 A
- EP 688794 A
- WO 9951646 A
- WO 0155230 A
- WO 2005118655 A
- EP 810235 A
- WO 2014096296 A
- WO 2016097193 A

**Non-patent literature cited in the description**

- **B. HAGSTRÖM.** Conference on Polymer Processing (The Polymer Processing Society). *Extended Abstracts and Final Programme,* 19 August 1997, vol. 4, 13